# EUROPEAN PATENT SPECIFICATION

(11) **EP 1 635 992 B1**
(45) Date of publication and mention of the grant of the patent: **30.01.2008**
(21) Application number: 04734060.9
(22) Date of filing: 20.05.2004
(51) Int. Cl.: B24D 3/10, B24D 18/00, B22F 7/06, B23B 27/14

(54) **METHOD OF MAKING A TOOL COMPONENT**
VERFAHREN ZUR HERSTELLUNG EINES WERKZEUGTEILS
PROCEDE DE FABRICATION D'UN ELEMENT D'OUTIL

(30) Priority: 22.05.2003 ZA 200303969
(43) Date of publication of application: 22.03.2006
(73) Proprietor: ELEMENT SIX (PTY) LTD, 1559 Springs (ZA)
(72) Inventor: SIGALAS, Iakovos, 2195 Linden (ZA); FRIES, Robert, Johannesburg (ZA)
(74) Representative: Want, Clifford James
(86) International application number: PCT/IB2004/001630
(87) International publication number: WO 2004/103641

(56) References cited:
- EP-A- 0 111 600
- US-A1- 2002 007 972

## Description

### BACKGROUND OF THE INVENTION

This invention relates to a method of making a tool component.

Abrasive compacts are used extensively in cutting, milling, grinding, drilling, boring and other abrasive operations. Abrasive compacts consist of a mass of diamond or cubic boron nitride particles bonded into a coherent, polycrystalline conglomerate. The abrasive particle content of abrasive compacts is high and there is generally an extensive amount of direct particle-to-particle bonding. Abrasive compacts are made under elevated temperature and pressure conditions at which the abrasive particle, be it diamond or cubic boron nitride, is crystallographically stable.

Diamond abrasive compacts are also known as polycrystalline diamond or PCD and cubic boron nitride abrasive compacts are also known as polycrystalline CBN or PCBN.

Abrasive compacts tend to be brittle and in use they are frequently supported by being bonded to a cemented carbide substrate or support. Such supported abrasive compacts are known in the art as composite abrasive compacts. Composite abrasive compacts may be used as such in a working surface of an abrasive tool. Where the composite abrasive compact has a thick abrasive compact layer, particularly a thick diamond compact layer, residual tensile stresses in the abrasive compact layer develop giving rise to problems in use. These stresses contribute to delamination and fracture of the compact layer in use. To minimise these problems, the interface between the abrasive compact layer and carbide substrate may be profiled and/or the composition of the compact layer varied, for example by introducing some carbide particle content in a region or regions adjacent the substrate/compact layer interface.

Cemented carbide is used as a material for producing tool components which have an abrasiveness and hardness less than PCD or PCBN. Such tool components may consist of a homogeneous cemented carbide or a cemented carbide which varies in composition.

Thus EP 0111600 discloses a method of producing a cutting element or tool from tungsten carbide and a binder in which a concentration of the carbide varies radially through the tool by depositing a varying mixture of powdered carbide and powdered metal or metal alloy binder on a rotating die.

### SUMMARY OF THE INVENTION

According to the present invention there is provided a method of producing a tool component comprising a working portion of bonded abrasive particles in the form of an ultra-hard abrasive compact, which includes a non-homogenous region, the method including the steps of: providing first and second sources of material, the first source comprising a mass of discrete ultra-hard abrasive particles in a binder and the second source comprising a mass of discrete abrasive particles, different from those of the material of the first source, in a binder, delivering a quantity of material from each source to a zone where mixing occurs, applying the mixed materials to a surface to produce a layer of the mixed materials in a green state form of the non-homogenous region on the surface, and subjecting the layer to elevated temperature and pressure conditions at which the ultra-hard abrasive particle is crystallographically stable. The layer of mixed materials will form at least a part of the non-homogeneous region of the working portion of the tool component. The non-homogeneous region can differ in size of abrasive particle, in the nature of the abrasive particle or in a combination thereof. The layer of the mixed materials is a green state form of the non-homogeneous region.

The material of one source comprises a mass of discrete ultra-hard abrasive particles such as diamond or cubic boron nitride in a binder. The material of the other source comprises a mass of discrete abrasive particles different to those of the material of the first source, for example carbide particles, in a binder. By controlling the quantity of material from each source which is delivered to the mixing zone, different mixtures of the two abrasives can be created. In this way, layers, e. g. one on top of the other, can be produced which differ from their neighbours in abrasive particle composition. These layers, on sintering, form non-homogeneous regions in the working portion of a tool component.

In a form of the invention, the materials of the two sources contain the same abrasive particle, but in different particle sizes. In a similar manner by controlling the quantity of material from each source which is delivered to the mixing zone, layers which differ in particle size composition from each other can be produced.

It is preferred that the mixed materials are delivered from the mixing zone in the form of a spray.

The surface to which the layer or layers of mixed material is applied may be the surface of a cemented carbide substrate producing, for example, a green state composite abrasive compact. This green state composite abrasive compact, on sintering at temperature and pressure conditions.at which the abrasive particle is crystallographically stable, results in a composite abrasive compact being produced. The surface to which the layer of mixed materials is applied may be the surface of a substrate which is sacrificed leaving a green state layer or layers of mixed materials which may be sintered.

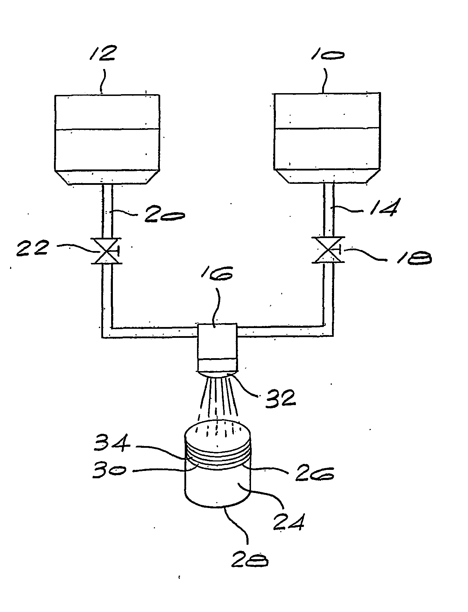

### BRIEF DESCRIPTION OF THE DRAWING

The invention will now be described in more detail, by way of example only, with reference to the accompanying drawing which is a diagrammatical representation of apparatus suitable for carrying out an embodiment of the invention.

### DESCRIPTION OF EMBODIMENTS

Embodiments of the invention will now be described with reference to the accompanying drawing. Referring to the drawing, there is shown apparatus comprising containers 10, 12. The containers are suitable for holding a mass of abrasive particles in a suitable binder. Examples of suitable binders are organic binders such as methyl or ethyl cellulose or polyvinylpyrrolidone. The abrasive particles will generally be uniformly dispersed in the binder and will be flowable. The abrasive particles of container 10 will, for example, be ultra-hard abrasive particles such as diamond or cubic boron nitride. The abrasive particles of container 12 will be different to those of container 10 and will, for example, be carbide particles. Passage 14 from container 10 leads to a mixing zone 16. Flow of material from the container 10 is controlled from valve 18. Passage 20 from container 12 leads to the mixing zone 16. Flow of material from container 12 is controlled by valve 22.

In use, a substrate 24, typically a cemented carbide substrate, is provided. The substrate is cylindrical in shape and has an upper flat surface 26 and a lower flat surface 28. A first layer 30 of mixed materials is applied to the surface 26. This is achieved by opening valves 18, 22 to a desired extent, thereby delivering material from each of the containers 10, 12 to the mixing zone 16. The materials are thoroughly mixed in zone 16 and thereafter sprayed through nozzle 32 on to the surface 26. Thereafter, a second layer 34 is applied to the layer 30. This layer will also be applied using this wet powder spraying (WPS) method, save that the proportions of material delivered from containers 10 and 12 will be varied by means of the amount delivered through the valves 18, 22. Additional layers are added to the layer 34. The compositions of these additional layers will be tailored to meet specific requirements.

The layered product is a green state product. The layers on the substrate 34 are all coherent and hold their shape. The green state product is then sintered to cause the various layers to sinter and bond to each other and the layer 30 to bond to the substrate. For example, the container 10 may contain diamond particles, in which event the container will generally contain finely particulate metal such as nickel, iron or cobalt as a mixture with the diamond particles. The container 12 may contain carbide particles. The layers 30 and 34 will generally contain a mixture of diamond particles and carbide particles in varying amounts. The outer layer or layers will generally contain only diamond particles. The green state product will be sintered under diamond synthesis conditions and the resulting product will be a composite diamond abrasive compact. A diamond compact layer will be formed from the green state layers. The diamond compact layer of such a product will be substantially stress-free.

In an alternative embodiment of the invention, the container 10 may contain abrasive particles of a particular size and the container 12 contain the same abrasive particles but of different size. The various layers in the green state product may thus all contain the same abrasive particles but the size composition of each layer may be varied to achieve a particular objective.

It will be appreciated that by use of the method of the invention, it is possible to produce layered structures having a wide range of compositions varying from each other. Further, the illustrated embodiment has the layers one on top of the other. The method can also be used to produce layers which are vertically or otherwise disposed relative to each other.

The layered structure may be applied directly to a substrate to which it is desired to bond the layers on sintering. Alternatively, the layers may be applied to a surface, then removed from that surface and applied to a surface of a substrate to which bonding takes place.

The method of the invention may be further understood with reference to the following non-limiting Examples.

### EXAMPLE 1

A cylindrical-shaped component was prepared with a WC/diamond gradient in the axial direction using the wet powder spraying (WPS) method of the invention. The starting layer of the cylinder was a 4mm layer of WC/Co. This was not prepared using the wet powder spraying method, but was rather pressed from commercially available powder at 100MPa to obtain a strong, porous support for the subsequent layer deposition. This base layer was then strengthened further by a pre-sintering treatment under hydrogen at 600°C. The porosity of this layer was chosen to achieve a similar shrinkage behaviour to the overlying layers. The WC/Co grain composition was the same as that used in the diamond graded layers.

49 gradient layers, each of approximately 100µm thickness, with WC/diamond ratios varying in a monotonic manner were then deposited onto the WC/Co base by the WPS method. The diamond and WC particles were provided from separate containers, each in a suspension which included polyvinylpyrrolidone as binder, Lupasol P as dispersant and water. The composition ranged from 98% WC/2% diamond (by mass) in the layer immediately adjacent to the base layer to 100% diamond in the uppermost layer. The composition was altered in 2% steps by altering the flow of WC particles from one container and diamond particles from another container. In order to preserve a cylindrical shape in the component, a cylindrical mold was used for containing the sprayed layers.

As the concentration of diamond particles, which had an average particle size of about 4µm, in the suspension increased (according to the axial gradient), so the overall composition of the suspension altered. The decrease in matrix mass due to the density difference between diamond and WC/Co meant that the binder and dispersant masses had to decrease in a similar fashion. The overall water content therefore increased with respect to the dry powder weight. Each layer was dried before the subsequent layer was sprayed to prevent shrinkage problems.

The green compact was then de-binded at a sufficiently high temperature to remove the binder and dispersant phases. A high pressure, high temperature treatment was then used to sinter the green compact to produce a sintered compact. The sintered compact exhibited a marked reduction in residual tensile stresses in the abrasive compact layer.

### EXAMPLE 2

A cylindrical-shaped component was prepared with a diamond grain size gradient in the axial direction using a wet powder spraying (WPS) method similar to that described in Example 1. The diamond layer immediately adjacent to the WC/Co base layer was chosen to have an average grain size of approximately 25µm, whilst the diamond layer in the uppermost layer was chosen to have an average grain size of approximately 4µm. 50 layers were deposited, each of approximately 100µm in thickness. The ratio of the two diamond grain sizes was altered in monotonic manner in 2% compositional intervals, from 100% 25µm diamond at the base surface to 100% 4µm diamond at the uppermost surface.

The mass composition of the WPS suspension did not alter signficantly from the base to the top layers, as the matrix material was consistently diamond throughout. The final compact was de-binded in a similar fashion to the compact generated in Example 1, and was then treated under high pressure and high temperature to achieve a fully sintered compact with diamond to diamond bonding. The sintered compact once again provided an abrasive compact layer with a significant reduction in residual tensile stresses.

### EXAMPLE 3

A cylindrical-shaped component was prepared with a gradient in diamond grain size and chemical composition in the axial direction using a wet powder spraying (WPS) method similar to that described in Example 1.

The layer immediately adjacent to the WC/Co base layer contained diamond grains of 25 µm in size and WC/Co particles of 2.5µm in size in a 75:25 (diamond:WC/Co) mass ratio. The uppermost layer contained 100% diamond material of an average of 4µm in size. The ratio of these two source compositions was altered in monotonic manner in 2% compositional intervals, from 100% (25µm diamond/(WC/Co) mix) at the base surface to 100% 4µm diamond at the uppermost surface.

The final compact was then de-binded in a similar fashion to the compact generated in Example 1, and was then treated under high pressure and high temperature to achieve a fully sintered compact with diamond to diamond bonding. Residual tensile stresses were once again significantly reduced in the abrasive compact layer.

## Claims

1. A method of producing a tool component comprising a working portion of bonded abrasive particles in the form of an ultra-hard abrasive compact, which includes a non-homogenous region, the method including the steps of:
providing first and second sources (10, 12) of material, the first source comprising a mass of discrete ultra-hard abrasive particles in a binder and the second source comprising a mass of discrete abrasive particles, different from those of the material of the first source, in a binder,
delivering a quantity of material from each source to a zone (16) where mixing occurs,
applying the mixed materials to a surface (26) to produce a layer (30) of the mixed materials in a green state form of the non-homogenous region on the surface, and
subjecting the layer to elevated temperature and pressure conditions at which the ultra-hard abrasive particle is crystallographically stable.

2. A method according to claim 1, wherein the layer of mixed materials forms at least a part of the non-homogeneous region of the working portion of the tool component.

3. A method according to claim 1 or claim 2, wherein the non-homogeneous region differs in size of abrasive particle, in the nature of the abrasive particle or in a combination thereof.

4. A method according to any of claims 1 to 3, wherein the first source (10) of material comprises a mass of discrete diamond or cubic boron nitride particles in a binder and the second source (12) of material comprises carbide particles in a binder.

5. A method according to any of the preceding claims, comprising first and second sources (10, 12) of material, the materials of the two sources containing the same abrasive particle, but in different particle sizes.

6. A method according to any one of the preceding claims, wherein the mixed materials are delivered from the mixing zone (16) in the form of a spray.

7. A method according to any one of the preceding claims, wherein the surface (26) to which the layer or layers of mixed material is applied is the surface of a cemented carbide substrate producing a green state composite abrasive compact.

8. A method according to any one of the preceding claims, wherein the surface (26) to which the layer or layers of mixed materials is applied is the surface of a substrate which is sacrificed leaving a green state layer or layers of mixed materials which is then sintered.

## Patentansprüche

1. Verfahren zum Herstellen einer Werkzeugkomponente, umfassend einen Arbeitsabschnitt von geklebten, Schleifpartikeln in der Form eines ultra-harten Schleif-Presskörpers, der einen nicht-homogenen Bereich beinhaltet, wobei das Verfahren die Schritte beinhaltet:
Bereitstellen erster und, zweiter Materialquellen (10, 12 ), wobei die erste Quelle eine Masse von diskreten ultra-harten Schleifpartikeln in einem Bindemittel umfasst, und wobei die zweite Quelle eine Masse von diskreten Schleifpartikeln in einem Bindemittel umfasst, die verschieden von jenen des Materials der ersten Quelle sind,
zuführen eine Materialmenge von jeder Quelle in eine Zone (16), wo ein Mischen stattfindet, .
Aufbringen der gemischten Materialien auf eine Oberfläche (26) um eine Schicht (30) der gemischten Materialien in einer Grünzustandsform des nicht-homogenen Bereichs auf der Oberfläche herzustellen, und
Aussetzen der Schicht an eine erhöhte Temperatur und Druckbedingungen, bei welchen das ultra-harte Schleifpartikel kristallographisch stabil ist.

2. Verfahren nach Anspruch 1, wobei die Schicht gemischter Materialien mindestens einen Teil des nicht-homogenen Bereichs des Arbeitsabschnitts der Werkzeugkomponente bildet.

3. Verfahren nach Anspruch 1 oder Anspruch 2, wobei der nicht-homogene Bereich in der Größe des Schleifpartikels oder in einer Kombination davon abweicht.

4. Verfahren nach irgendeinem der Ansprüche 1 bis 3, wobei die erste Materialquelle (10) eine Masse von diskretem Diamant oder kubischen Bornitrid-Partikeln in einem Bindemittel umfasst, und wobei die zweite Materialquelle (12) Carbid-Partikeln in einem Bindemittel umfasst.

5. Verfahren nach irgendeinem der vorhergehenden Ansprüche, umfassend erste und zweite Materialquellen (10,12), wobei die Materialien der zwei Quellen das gleiche Schleifpartikel aber in unterschiedlichen Partikelgrößen enthalten.

6. Verfahren nach irgendeinem der vorhergehenden Ansprüche, wobei die gemischten Materialien von der Mischzone (16) in der Form eines Sprays gefördert werden.

7. Verfahren nach irgendeinem der vorhergehenden Ansprüche, wobei die Oberfläche (26) auf welche die Schicht oder Schichten von gemischtem Material aufgebracht werden, die Oberfläche eines zementierten Carbid-Substrats ist, die einen Schleif-Verbundpresskörper im Grünzustand herstellt.

8. Verfahren nach irgendeinem der vorhergehenden Ansprüche, wobei die Oberfläche (26), auf welche die Schicht oder Schichten von gemischten Materialien aufgebracht werden, die Oberfläche eines Substrats ist, welche geopfert eine Schicht oder Schichten gemischter Materialien im Grünzustand verlässt, die dann gesintert wird.

## Revendications

1. Procède, pour produire un composant d'outil comprenant une partie de travail en particules abrasives reliées se présentant sous la forme d'un élément compact abrasif ultra dur, qui comprend une région non homogène, le procédé comprenant les étapes consistant à :
prévoir des première et seconde sources (10, 12) de matériau, la première source comprenant une masse de particules abrasives ultra dures distinctes dans un liant et la seconde source comprenant une masse de particules abrasives distinctes, différentes de celles du matériau de la première source, dans un liant,
distribuer une quantité de matériau à partir de chaque source à une zone (16) où le mélange a lieu,
appliquer le matériau mélangé sur une surface (26) pour produire une couche (30) de matériau mélangé sous une forme à l'état vert de la région non homogène sur la surface, et
soumettre la couche à des conditions de température et de pression élevées auxquelles la particule abrasive ultra dure est stable du point de vue cristallographique.

2. Procédé selon la revendication 1, dans lequel la couche de matériaux mélangés forme au moins une partie de la région non homogène de la partie de travail du composant d'outil.

3. Procédé selon la revendication 1 ou la revendication 2, dans lequel la région non homogène est différente du point de vue de la taille de la particule abrasive, du point de vue de la nature de la particule abrasive ou dans sa combinaison.

4. Procédé selon l'une quelconque des revendications 1 à 3, dans lequel la première source (10) de matériau comprend une masse de particules de diamant ou de nitrure de bore cubique dans un liant et la seconde source (12) de matériau comprend des particules de carbure dans un liant.

5. Procédé selon l'une quelconque des revendications précédentes, comprenant des première et seconde sources (10, 12) de matériau, les matériaux des deux sources comprenant la même particule abrasive, mais avec des tailles de particules différentes.

6. procédé selon l'une quelconque des revendications précédentes, dans lequel les matériaux mélangés sont distribués à partir de la zone de mélange (16) sous la forme d'une pulvérisation.

7. Procédé selon l'une quelconque des revendications précédentes, dans lequel la surface (26) sur laquelle la couche ou les couches de matériau mélangé est (sont) appliquée(s), est la surface d'un substrat en carbure métallique produisant un élément compact abrasif composite à l'état vert.

8. Procédé selon l'une quelconque des revendications précédentes, dans lequel la surface (26) sur laquelle la couche ou les couches de matériaux mélangée est (sont) appliquée(s), est la surface d'un substrat qui est sacrifié, laissant une couche ou des couches à l'état vert de matériaux mélangés qui est (sont) ensuite frittée(s).
